# EUROPEAN PATENT SPECIFICATION

(11) **EP 2 979 979 B1**
(45) Date of publication and mention of the grant of the patent: **30.12.2020**
(21) Application number: 15178375.0
(22) Date of filing: 24.07.2015
(51) Int. Cl.: B64C 39/02, B64C 11/48

(54) **SYSTEMS AND METHODS FOR COUNTERING AN UNMANNED AIR VEHICLE**
SYSTEME UND VERFAHREN ZUM ENTGEGNEN EINES UNBEMANNTEN LUFTFAHRZEUGS
SYSTÈMES ET PROCÉDÉS DESTINÉS À CONTRER UN VÉHICULE AÉRIEN SANS PILOTE

(30) Priority: 28.07.2014 US 201462030024 P; 16.07.2015 US 201514801479
(43) Date of publication of application: 03.02.2016
(60) Divisional application: 20203534.1
(73) Proprietor: Insitu, Inc., Bingen, WA 98605 (US)
(72) Inventor: GOODRICH, Wayne, White Salmon, WA 98672 (US)
(74) Representative: Boult Wade Tennant LLP

(56) References cited:
- US-A- 1 825 578
- US-A- 2 401 853
- US-A1- 2007 023 582
- US-A1- 2010 237 183
- US-B1- 8 205 537
- GALINSKI ET AL: "Results of the Gust Resistant MAV Programme", 28TH INTERNATIONAL CONGRESS OF THE AERONAUTICAL SCIENCES, 2012, XP055237606,

## Description

### TECHNICAL FIELD

The present disclosure is directed generally to systems and methods for countering an unmanned air vehicle (UAV). In particular embodiments, representative systems and methods include directing an interceptor UAV toward a target UAV to disable the target UAV.

### BACKGROUND

Unmanned air vehicles (UAVs) have been used in a wide variety of capacities to provide surveillance and perform other tasks. Some tasks include destroying, disabling or otherwise damaging a target on the ground. Accordingly, a need has arisen for systems to counter such UAVs so as to avoid damage to military and/or civilian installations. The present disclosure is directed to such systems.

In "Results of the Gust Resistant MAV Programme" by Galinski et al. there is described results of an investigation on unmanned, supermaneouvral, fixed wing, Micro Aerial Vehicle (MAV). In particular results of multidisciplinary optimization are discussed. They were validated both numerically and experimentally with application of the wind tunnel. Both steps of validation are presented. At the end, final flight test campaign and its results are described.

In US 2401853 there is described an arieal torpedo or bomb having glider wings and an empennage applied thereto, whereby it can be released from a carrier airplane beyond the defensive anti-aircraft fire range and thereafter glide into contact with the target while the carrier airplane remains outside or above the effective range of defensive fire.

In US 1825578 there is described an invention that relates to aircraft in general and particularly to heavier-than-air flying machines such as airplanes.

US 8205537, in accordance with its abstract, states an interceptor projectile includes a deployable net that deploys during flight and wraps around an incoming projectile, such as a rocket propelled grenade (RPG). The net is initially in a tubular body of the interceptor projectile. A propellant is used to deploy the net from the body. Even after deployment the net remains attached to the body by an elastic tether. The engagement of the net with the incoming projectile disables the incoming projectile, with the momentum imparted by the interceptor projectile sending the incoming projectile off course. This successfully defends a target against the incoming projectile. Through the tether, substantially all of the parts of the interceptor projectile may be mechanically linked together even after deployment of the net. This mechanical linking provides more momentum for impacting the interceptor projectile, which may facilitate diverting the incoming projectile.

There is described herein an interceptor UAV for disabling a target UAV, the interceptor UAV comprising a flight vehicle having: a generally cylindrical fuselage elongated along a fuselage axis; a propulsion system that includes: a first propeller positioned along the fuselage axis; a second propeller positioned along the fuselage axis; and a power source coupled to the first and second propellers to rotate the first propeller in a first direction and rotate the second propeller in a second direction opposite the first direction; a fin carried by the fuselage and being one of three fins, wherein each fin includes a slot that receives the first and second propellers as the propellers rotate; at least one control surface; a guidance system carried by the flight vehicle and coupled to the at least one control surface; and a disabling system carried by the flight vehicle and having a first, inactive mode and a second, active mode, wherein in the second mode, the disabling system is positioned to disable the target UAV. The guidance system may be configured to direct the vehicle along a controlled flight path to ground. The guidance system may be configured to direct the vehicle along a controlled flight path to ground upon receiving at least one of the following indications: (a) an indication to not engage with the target UAV; or (b) an indication that the interceptor UAV did not sufficiently disable the target UAV. This may improve operation. The fin may be one of four fins arranged in a cruciform shape, or the fin may be one of three fins to enhance performance.

Each fin may have a fin slot extending from the fuselage in an outboard direction transverse to the fuselage axis. The first propeller may be carried by the fuselage and rotatable about the fuselage axis in a first direction to sequentially pass in and out of successive fin slots. The second propeller may be carried by the fuselage and rotatable about the fuselage axis in a second direction opposite the first direction to sequentially pass in and out of the successive fin slots. The at least one control surface may be carried by at least one of the fins. The propulsion system may further comprise: a power source carried by the fuselage, the power source including a first electric motor coupled to the first propeller to rotate the first propeller in the first direction, and a second electric motor coupled to the second propeller to rotate the second propeller in the second direction; and a stored electrical energy source coupled to the first and second electric motors. The flight vehicle does further comprise a guidance system coupled to the at least one control surface. The disabling system may comprise a deployable net carried by the flight vehicle and having a first, inactive mode and a second, active mode, wherein in the second mode, the deployable net is deployed from the flight vehicle to disable the target UAV. The net may be configured to detach from the interceptor UAV after deploying. The net may be configured to remain attached to the interceptor UAV after deploying. The stored energy source may include a single source for both the first and second motors. The stored energy source may include a first source for the first motor and a second source for the second motor. Each of these characteristics may enhance operation of the UAV.

An additional example can involve an interceptor UAV system for disabling a target UAV, the system may include an interceptor UAV; a target acquisition system directable to an airspace to detect, track, or detect and track an incoming target UAV; a launch control system coupleable to the target acquisition system, the launch control system including instructions that, when executed, automatically direct the interceptor UAV to launch; and an engagement system carried by the interceptor UAV and in communication with the target acquisition system, the engagement system being programmed with instructions that, when executed, (a) direct the interceptor UAV to the target UAV; and (b) direct the interceptor UAV to land if the interceptor UAV does not successfully disable the target UAV. The interceptor UAV system may also include a disablement system carried by the interceptor UAV and being activatable to disable the target UAV. The disablement system may include a deployable net. The interceptor UAV may include a generally cylindrical fuselage; a fin carried by the fuselage; and a propulsion system that includes: a first propeller; a second propeller; and a power source coupled to the first and second propellers to rotate the first propeller in a first direction and rotate the second propeller in a second direction opposite the first.

An additional example can involve an interceptor UAV system for disabling a target UAV, the system may include an interceptor UAV; a radar scanner directable to an airspace to detect an incoming target UAV; a ground-based targeting radar system coupleable to the scanner to (a) receive a location and track of the target UAV; and (b) determine an interception track for the interceptor UAV; a launch control system coupled to the targeting radar system, the launch control system including instructions that, when executed, automatically direct the interceptor UAV to launch; a ground-based optics system coupleable to the ground-based targeting radar system to acquire a first image of the target UAV; an interceptor optics system carried by the interceptor UAV and positionable to acquire a second image of the target UAV; an engagement system carried by the interceptor UAV and programmed to direct at least one of: an engagement flight path; or a non-engagement flight path, wherein the non-engagement path includes a return controlled flight path to ground; and a disabling system carried by the interceptor and deployable to disable the target UAV. The engagement system may be programmed to automatically direct the engagement flight path or the non-engagement flight path based on a comparison of the first and second optical images. The interceptor UAV may be a first interceptor UAV and wherein the launch control system includes instructions that, when executed, automatically direct a second interceptor UAV to launch before the first interceptor UAV disables the target UAV.

An additional example can involve a UAV system for use with an interceptor UAV that may include an engagement system programmed with instructions that, when executed: (a) direct the interceptor UAV to a target UAV; and (b) direct the interceptor UAV to land if the interceptor UAV does not successfully disable the target UAV. The engagement system may be programmed with instructions that, when executed, direct the interceptor UAV to disable the target UAV. The engagement system may be programmed with instructions that, when executed, direct the interceptor UAV to disable the target UAV by striking the UAV. The engagement system may be programmed with instructions that, when executed, direct the interceptor UAV to land if the target UAV has already been disabled by another interceptor UAV. The UAV engagement system may be programmed with instructions that, when executed, direct the interceptor UAV to land after the target UAV has been disabled by the interceptor UAV.

An additional example can involve a method for disabling a target UAV that may include directing an interceptor UAV toward the target UAV; and disabling the target UAV by deploying a disabling element from the interceptor UAV to contact the target UAV. The disabling element may include a net. The method may also include detaching the net from the interceptor UAV; and directing the interceptor UAV to land. This will enhance operation.

There is described herein a method for disabling a target UAV, the method comprising directing an interceptor UAV toward the target UAV; and directing the interceptor UAV back to ground along a controlled flight path. Directing the interceptor UAV back to ground may be performed in response to an instruction not to engage with the target UAV. Directing the interceptor UAV back to ground may be performed in response to an unsuccessful attempt by the interceptor UAV to engage with the target UAV. Directing the interceptor UAV back to ground may be performed in response to successfully deploying a disabling element to disable the target UAV which may improve performance.

An additional example can involve a method for disabling a target UAV that may include detecting an incoming target UAV; directing an interceptor UAV to launch vertically and fly toward the target UAV; in response to a decision not to engage with the target UAV, directing the interceptor UAV along a controlled flight path to the ground; and in response to a decision to engage with the target UAV: (a) continue tracking the target UAV from the interceptor UAV; and (b) when the target UAV is within a target range of the interceptor UAV, deploying a net from the interceptor UAV to contact the target UAV. The method may also include comparing a ground-based first image of the target UAV with an interceptor UAV-based second image of the target UAV; and based at least on a comparison of the first and second images, determine whether or not to engage with the target UAV. Deploying a net may include directing weights at an outer region of the net to move in an outward direction. The method may also include maintaining a connection between the net and the interceptor UAV after the net has entangled the target UAV. The method may also include identifying that deploying the net has not disabled the target UAV; and directing the interceptor UAV along a controlled flight path to the ground.

### BRIEF DESCRIPTION OF THE DRAWINGS

Figure 1 is an overall schematic illustration of a counter-UAV system and associated methods.
Figure 2 is a side view of a representative interceptor UAV configured in accordance with an embodiment of the present disclosure.
Figures 3A-3C are front isometric, top plan, and front views, respectively, of a representative interceptor UAV shown in Figure 2.
Figure 4 is a partially schematic timeline and illustration of a representative trajectory for a target UAV and associated interceptor UAVs, in accordance with a particular embodiment of the present technology.
Figure 5 is a table illustrating expected specifications for an interceptor UAV configured in accordance with a particular embodiment of the present technology.
Figure 6 illustrates a representative disabling system configured in accordance with an embodiment of the present technology.
Figure 7 illustrates representative subsystems and transport features in accordance with particular embodiments of the present technology.

### DETAILED DESCRIPTION

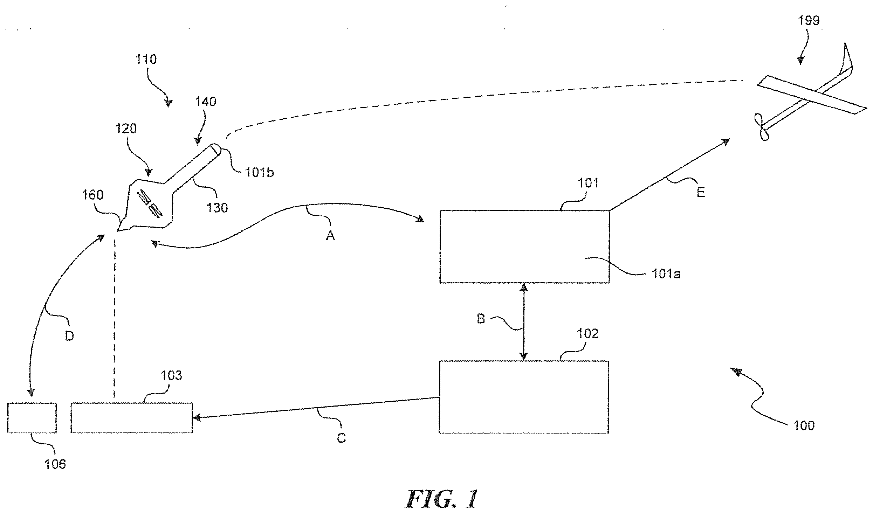

The present disclosure is directed generally to counter-UAV systems and associated methods. A representative counter-UAV system in accordance with a particular embodiment includes an interceptor UAV that is launched toward a detected target UAV. The target UAV is detected, for example, by a ground-based detector, which triggers a launch sequence for the interceptor UAV. The interceptor UAV then flies autonomously to intercept the target UAV. For at least one phase of operation, the interceptor UAV may receive signals from the ground to assist in directing it toward the target. During another phase of operation, the interceptor UAV can operate without such assistance, e.g., as it engages with the target UAV. The interceptor UAV can disable the target UAV, for example, by deploying a net that interferes with the flight of the target UAV and causes the target UAV to strike the ground. In particular embodiments, the interceptor UAV can also return to the ground, but in a controlled manner (so as to be used again), e.g., if it does not successfully engage with and/or disable the target UAV. Further embodiments and specific details of representative systems and methods in accordance with the present technology are described below with reference to Figures 1-7.

Many embodiments of the present disclosure described below may take the form of computer- or controller-executable instructions, including routines executed by a programmable computer, controller and/or associated system. Those skilled in the relevant art will appreciate that the disclosure can be practiced on computer systems other than those shown and described below. The technology can be embodied in a special purpose computer or data processor that is specifically programmed, configured or constructed to perform one or more of the computer-executable instructions described below. Accordingly, the terms "computer" and "controller" as generally used herein refer to any suitable data processor and can include Internet appliances and handheld devices, including palmtop computers, wearable computers, cellular or mobile phones, multi-processor systems, processor-based or programmable consumer electronics, network computers, mini-computers and the like. Information handled by these computers and/or controllers can be presented to a user, observer, or other participant via any suitable display medium, such as an LCD screen.

In particular embodiments, aspects of the present technology can be practiced in distributed environments, where tasks or modules are performed by remote processing devices that are linked through a communications network. In distributed computing environments, program modules or subroutines may be located in local and remote memory storage devices. Aspects of the technology described below may be stored or distributed on computer-readable media, including magnetically or optically readable or removable computer disks, as well as distributed electronically over networks. Data structures and transmissions of data particular to aspects of the present technology are also encompassed within the scope of particular embodiments of the present technology.

Figure 1 illustrates an overall system 100 that includes an interceptor UAV 110 configured to disable or destroy a target UAV 199. The interceptor UAV 110 can include a propulsion system 120, a guidance system 130 (e.g., computer-based or controlled), a communication system 160 (e.g., computer-based or controlled), and an engagement system 140 (e.g., computer-based or controlled). The engagement system 140 is used to engage with and disable the target UAV 199. The overall system 100 can further include a target acquisition system 101 (e.g., computer-based or controlled), which operates in (and/or can otherwise monitor) the airspace in which the target UAV 199 may appear to acquire the target UAV 199, as indicated by arrow E. The target acquisition system 101 further includes one or more first components 101a that are not carried by the interceptor UAV 110, and one or more second components 101b that are carried by the interceptor UAV 110. These components can communicate with each other, as indicated by arrow A. A launch control system 102 communicates with the target acquisition system 101 (as indicated by arrow B) and, based on the information it receives, transmits a signal to a launcher 103 (e.g., computer-based or controlled) (as indicated by arrow C). The launcher 103 launches the interceptor UAV 110, which then flies toward the target UAV 199 and then intercepts and engages with the target UAV 199. The interceptor UAV 110 communicates with a ground station or other controller 106 that provides command and control signals and/or receives data, as indicated by arrow D.

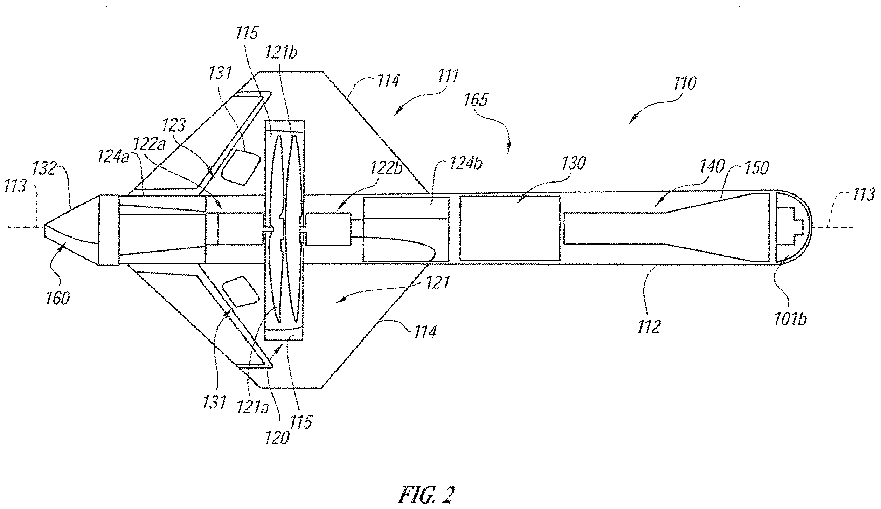

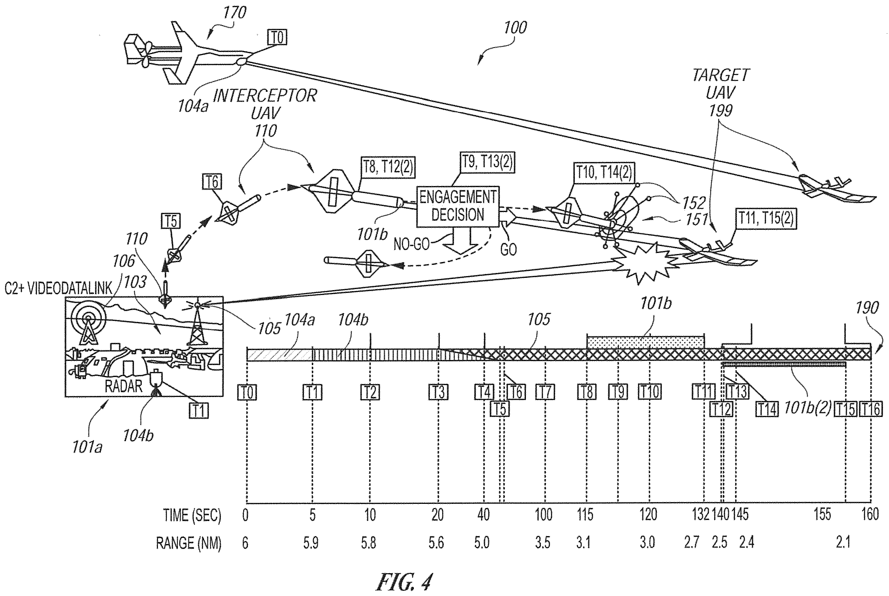

Further details of representative embodiments of the interceptor UAV 110 are described below with reference to Figures 2-3C. Further details of a representative sequence of events for intercepting a target UAV are then described below with reference to Figure 4, and Figures 5-7 provide additional details of selected features of the system 100.

Figure 2 is a partially schematic, partially transparent plan view of a representative interceptor UAV 110 described above with reference to Figure 1. In a particular aspect of this embodiment, the interceptor UAV 110 includes a flight vehicle 111 which in turn includes a fuselage 112 elongated along a fuselage axis 113. The interceptor UAV 110 includes a propulsion system 120 that can in turn include one or more propellers 121 that provide thrust for the interceptor UAV 110. In a particular embodiment, the propulsion system 120 includes a first propeller 121a and a second propeller 121b. The propellers 121a, 121b operate in a counter-rotating manner so as to reduce or eliminate twist or torque, which might otherwise be imparted to the interceptor UAV 110 as the propulsion system 120 generates thrust.

In a particular aspect of an embodiment shown in Figure 2, the propellers 121 can be integrated with the fuselage 112 at some distance along the length of the fuselage 112, rather than at the forward or aft tip of the fuselage 112. As shown in Figure 2, the first and second propellers 121a, 121b are positioned along the fuselage axis 113, e.g., about one-third of the distance between the aft end and the forward end of the fuselage 112. In a particular embodiment, the propellers 121a, 121b can also be integrated with one or more other elements of the interceptor UAV 110. The interceptor UAV 110 includes one or more fins 114 (e.g., four) that provide stability for the interceptor UAV 110. Each fin 114 includes a slot 115 that receives the first and second propellers 121a, 121b as the propellers rotate. Accordingly, as the propellers 121a, 121b rotate, they can pass sequentially from the slot 115 in one fin 114 to and through the slot 115 in the adjacent fin 114 so as to avoid interfering with the fins 114, while at the same time generating thrust for the interceptor UAV 110.

The propulsion system 120 can further include a power source 123 that provides power to the propellers 121a, 121b. In a particular embodiment, the power source 123 includes an electrical energy storage device, for example, one or more batteries 124. In still a further particular embodiment, the power source 123 includes two batteries: a first battery 124a and a second battery 124b. Each battery 124a, 124b directs electrical current to a corresponding motor 122 (shown as a first motor 122a and a second motor 122b), which rotate the first and second propellers 121a, 121b, respectively. The separate propellers, motors and batteries can provide a measure of redundancy for the interceptor UAV 110. In other embodiments, the propulsion system 120 can include other arrangements, for example, propellers driven by a single motor and/or a single battery, propellers powered by an internal combustion engine, and/or a rocket or other non-propeller system.

The interceptor UAV 110 can also include a vehicle management system (VMS) 165 that oversees, conducts, directs, and/or executes processes, at least some of which are carried out by a variety of systems, subsystems and/or other elements. Representative systems include a guidance system 130 that operates to control and guide the interceptor UAV 110 toward its target. For example, the guidance system 130 can be coupled to one or more control surfaces 131 to steer and maneuver the interceptor UAV 110. The control surfaces 131 can be carried by the fins 114 (as shown in Figure 2), and/or by the fuselage 112, and/or by other elements/structures of the interceptor UAV 110. In a particular embodiment, the control surfaces 131 are positioned in the prop wash from the propellers 121a, 121b to improve control authority at low airspeeds, e.g., during vertical take-off. The guidance system 130 can also include a navigation system 132 (e.g., an on-board GPS system) that provides information regarding the location of the interceptor UAV 110. The VMS 165 coordinates the operation of the navigation system 132 and the control surfaces 131 to provide for proper guidance of the interceptor UAV 110. The communication system 160 provides for communication with a ground station or other controller, and/or other elements of the overall system 100.

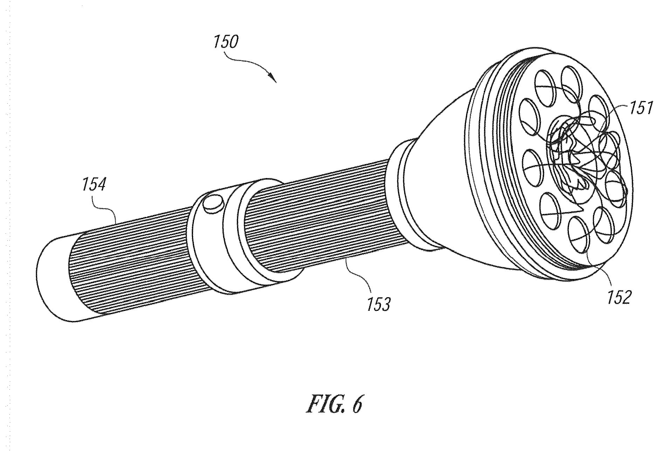

The interceptor UAV 110 can also include an engagement system 140 that is used to engage with the target UAV 199 described above with reference to Figure 1. In particular, the engagement system 140 can include the airborne component(s) 101b of the target acquisition system described above with reference to Figure 1. In addition, the engagement system 140 can include a disabling system 150 that disables the target UAV 199 when the interceptor UAV 110 is within a suitable range of the target UAV 199. In a particular embodiment, the disabling system 150 can include a disabling element, e.g., a net that is deployed to entangle the target UAV 199, as will be described further below with reference to Figures 4 and 6. The engagement system 140 can include, control, and/or communicate with other aircraft systems (e.g., the guidance system 130) that contribute to providing instructions for guiding the interceptor UAV 110 and/or directing the interceptor UAV 110.

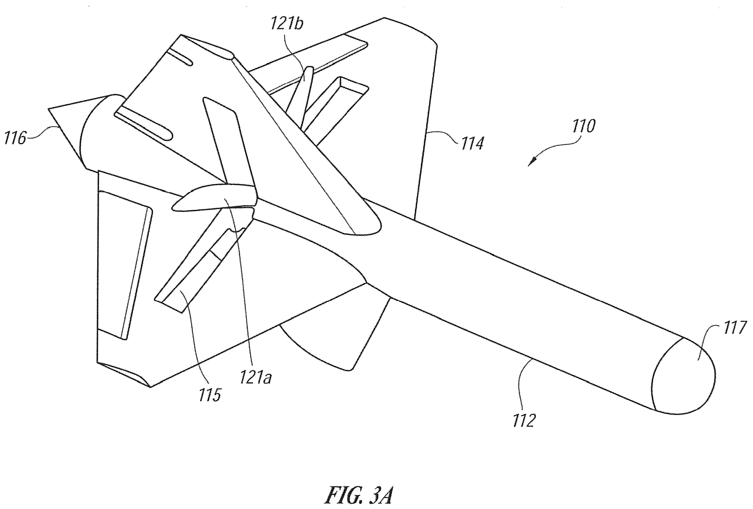

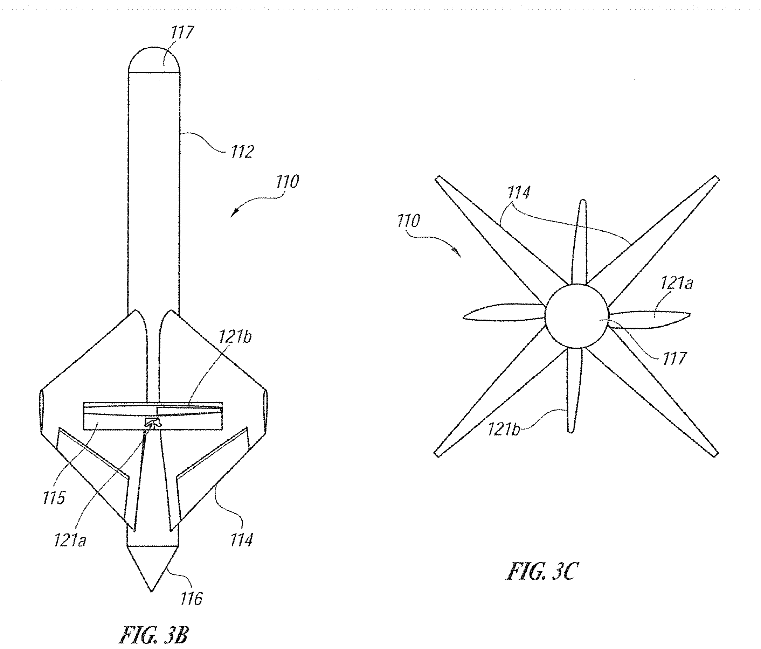

Figures 3A-3C illustrate further views of a representative embodiment of the interceptor UAV 110. For example, these Figures illustrate a nose 117 of the flight vehicle 111 that can house the airborne components 101b of the target acquisition system (see Figure 2). Figures 3A-3B also illustrate a tail cone 116 that can house the communication system 160, described above with reference to Figure 2.

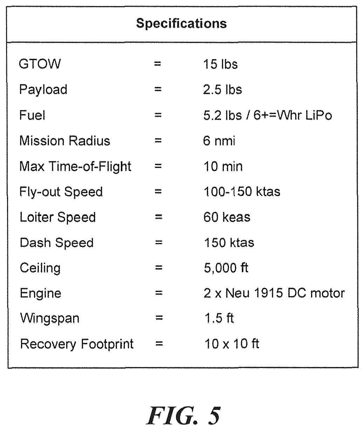

Figure 4 illustrates a timeline 190 having representative points in time (e.g., T0, T1, T2, etc.) that correspond to representative tasks performed by the system 100, as the interceptor UAV 110 engages the target UAV 199. Below the timeline, Figure 4 illustrates expected, representative elapsed times in accordance with a particular embodiment, along with representative down-range locations for the incoming target UAV 199. The times and ranges assume the target UAV 199 has a speed of about 90 knots. The characteristics of the interceptor UAV 110 are generally as described above with reference to Figures 2-3C, and as described in further detail later with reference to Figure 5.

Figure 4 also schematically identifies representative locations of the interceptor UAV 110 and the target UAV 199, with corresponding points in time (boxed) at which these vehicles arrive at the illustrated locations. In a particular embodiment shown in Figure 4, the overall system 100 deploys up to two interceptor UAVs 110 to disable the incoming target UAV 199. Accordingly, points in time associated with the second interceptor UAV are indicated with a parenthetical "2," e.g., "T7(2)." In other embodiments, the system can be configured to deploy a single interceptor UAV 110 and in still further embodiments, more than two interceptor UAVs 110.

The representative process shown in Figure 4 begins at time TO when the target UAV 199 is first detected by the system 100. In a particular embodiment, the target UAV 199 can be detected by a first detector, e.g., a first radar 104a. In a further aspect of this embodiment, the first radar 104a can be carried by an airborne platform 170. For example, the airborne platform 170 can include an RQ-21A aircraft manufactured by Insitu Inc., a subsidiary of The Boeing Company. In other embodiments, the airborne platform 170 can include other aircraft, and in still further embodiments, the first radar 104a can be carried by platforms other than airborne platforms.

At time T1, a second detector, e.g., a second radar 104b, assumes responsibility for tracking the target UAV 199. In a particular embodiment, the second radar 104b can include a ground-based radar and in other embodiments, the second radar 104b can have other locations. In any of these embodiments, information received from the second radar 104b is used to perform tracking tasks. For example, at time T2, the azimuth, elevation, and range of the target UAV 199 are calculated using information from the second radar 104b, and the track of the target UAV 199 is established. At time T3, the system 100 calculates an intercept track for the interceptor UAV 110. This information is then used to direct a launcher 103 to launch a first interceptor UAV 110 at time T4. In a particular embodiment, the launch is vertical, e.g., from a canister or other suitable launch device. In addition, at time T3, an additional tracking system, e.g., a ground-based optics system 105, begins identifying and tracking the target UAV 199. The ground-based optics system 105 remains actively engaged with the target UAV 199 throughout the rest of the process.

At time T5, the interceptor UAV 110 continues its upward and down-range trajectory. At time T6, the interceptor UAV 110 transitions to an intercept vector. In a particular embodiment, the interceptor UAV 110 achieves a speed of 100 KTAS, and transitions to a target acquisition mode.

At time T7, a second interceptor UAV 110 is launched (e.g., for systems 100 that include the capability for deploying multiple interceptor UAVs 110 toward a single target), typically before the first UAV 110 has disabled (or attempted to disable) the target UAV 199. The instructions given to the second interceptor UAV 110 and the actions taken by the second interceptor UAV 110 parallel those discussed above and further below with reference to the initial interceptor UAV 110. In Figure 4, selected times associated with the second interceptor UAV 110 are indicated with a parenthetical "2." Accordingly, "T7(2)" indicates the launch of the second interceptor UAV 110.

At time T8, the initial interceptor UAV 110 acquires the target UAV 199 using the second target acquisition system 101b carried by the interceptor UAV 110. For example, the second target acquisition system 101b can include an airborne optics system. The second target acquisition system 101b can remain active for the rest of the mission of the initial interceptor UAV 110.

Once the second target acquisition system 101b has acquired the target, the process can include comparing the image(s) obtained from the second target acquisition system 101b with the image(s) obtained from the ground-based optics system 105 and/or other elements of the first target acquisition system 101a. This process can be performed to confirm that the target acquired by the interceptor UAV 110 matches the target identified by the ground-based or other target acquisition systems. The comparison process can be carried out by a human operator in particular embodiments, and can be automated in other embodiments.

At time T9, an engagement decision is made. In some embodiments, human operators or other suitable personnel make the decision, and in other embodiments, the decision can be automated. In any of these embodiments, the decision can be made based on the comparison process described above, and/or other information received from the second target acquisition system 101b (carried by the first interceptor UAV 110) and/or other information received from the first target acquisition system 101a and/or other assets or subsystems. Once the decision is made, the first interceptor UAV 110 receives instructions to either continue with the intercept track, or abort the intercept track and return to ground. If the decision is made to abort the intercept track, the first interceptor UAV 110 returns to its base (or another suitable landing site) and lands, for example, with a controlled descent into an airbag, or via another suitable procedure.

If the decision is made to continue with the intercept track, then at time T10, the first interceptor UAV 110 executes a terminal maneuver. In a particular embodiment, the interceptor UAV achieves a velocity of 150 KTAS for this portion of the mission. In cases for which the interceptor UAV 110 includes an outward-deploying net, the track toward the target UAV 199 can be head-on to increase the likelihood for a successful engagement. The terminal maneuver can include deploying the disabling system 150 (e.g., deploying a net 151 and associated weights 152) that make contact with, tangle with, and/or otherwise disable the target UAV 199. In one aspect of this embodiment, the net 151 deploys generally outwardly to entangle the oncoming target UAV 199. In a further aspect of this embodiment, the net's outward deployment direction (rather than a forward deployment direction) reduces the likelihood that the net 151 will interfere with the nose-mounted second target acquisition system 101b. In other embodiments, the second target acquisition system 101b can be expended during the disabling process. In such cases, the interceptor UAV 110 can use other systems to perform a controlled landing, or can itself be expended.

During the disabling process, the net 151 can tangle with or otherwise become caught in the propeller(s), fuselage, lifting surfaces and/or other elements of the target UAV 199, so as to interfere with and disable the controlled flight of the target UAV 199. The net 151 can remain attached to the interceptor UAV 110 after it is deployed, so that both the first interceptor UAV 110 and the entangled target UAV 199 fall to the ground. In other embodiments, the net 151 can be released by the first interceptor UAV 110, in which case, the target UAV 199 can fall to the ground, and the first interceptor UAV 110 can return to ground in accordance with a controlled process (e.g., a normal landing), similar to or identical to the process described above in which the interceptor UAV 110 lands if a decision is made to abort the intercept mission.

If the first interceptor UAV 110 is successful, then at time T11, the intercept process is complete, and at time T12, the system 100 confirms the success of the intercept, e.g., from the ground-based optics system 105 and/or another sensor. The second interceptor UAV 110 then lands in a controlled manner.

If the terminal maneuver and intercept processes carried out by the first interceptor UAV 110 are not successful (e.g., if the first interceptor UAV 110 did not or did not sufficiently disable the target UAV 199), and if the first interceptor UAV 110 is still flyable, then the first interceptor UAV 110 returns to its base. For example, if the interceptor UAV releases the net 151 as part of the disabling process, and does not strike the target UAV 199 as part of the engagement maneuver, then the interceptor UAV 110 can redirect its flight path to land. If the net 151 remains attached to the interceptor UAV 110 during a normal disabling process, and the disabling process is not successful, the interceptor UAV 110 can jettison the net 151 before landing. In one aspect of such an embodiment, the net 151 can be deployed from the tail of the interceptor UAV 110 rather than the nose, to avoid interfering with the propellers of the interceptor UAV 110.

If the first interceptor UAV 110 is unsuccessful, then the second interceptor UAV 110 continues to carry out the mission. For example, at time T12, the second interceptor UAV 110 can acquire the target UAV 199. At time T13, the second interceptor UAV 110 can be directed to either complete the engagement process or return to base, and at time T14, the second interceptor UAV 110 can execute the terminal engagement process. At time T15, the second interceptor UAV 110 intercepts the target UAV 199, and at time T16, the system 100 confirms a successful intercept by the second interceptor UAV 110.

Figure 5 is a table illustrating representative specifications for an interceptor UAV 110 configured in accordance with a particular embodiment of the present technology. Figure 5 includes representative values for gross take-off weight (GTOW), payload, fuel (e.g., battery size and type), mission radius, endurance, speeds, ceiling, engine specification, wingspan, and recovery footprint (e.g., the size of an airbag used to recover the interceptor UAV 110). It is expected that an interceptor UAV 110 with the characteristics identified in Figure 5 can successfully intercept and disable a wide range of incoming target UAVs 199, e.g., ranging in size from micro-UAVs and quad-copters up to Tier II tactical UAS vehicles. Such UAVs are expected to be successfully intercepted and disabled at altitudes ranging from 0-5000 feet AGL.

Figure 6 illustrates a representative disabling system 150 configured in accordance with a particular embodiment of the disclosed technology. The system 150 can include a net gun 153, such as are commercially available for capturing wild animals. The net gun 153 can include a propellant 154 (e.g., a conventional CO₂ cartridge) which directs a net 151 in a laterally outward direction. The weights 152 spread the net 151 out as it deploys. The disabling system 150 can have multiple modes, e.g., an inactive mode, an armed mode and a deployed mode. In other embodiments, the disabling system 150 can include other elements. For example, the disabling system 150 can include projectile, explosive, and/or energy-based components (e.g., lasers and/or high-powered RF generators).

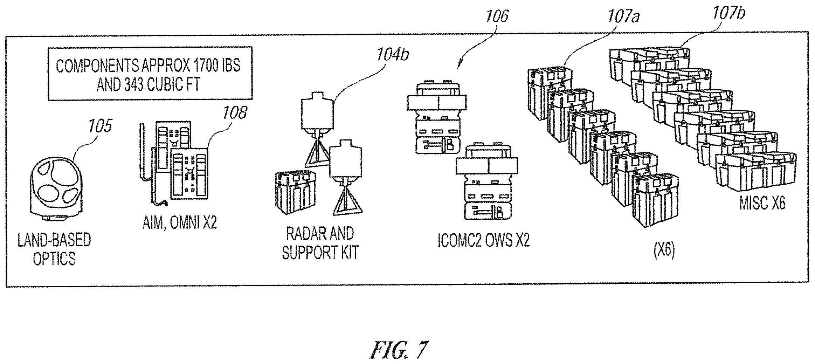

Figure 7 is a partially schematic illustration of particular components of the overall system 100 and containers in which the components can be transported. For example, Figure 7 illustrates a representative land-based optics system 105, a pair of antenna interface terminals 108 (for communication with the interceptor UAVs), and a ground-based radar and support system 104b. Figure 7 also illustrates a representative command, control and data system 106, for example, an ICOMC2 system available from Insitu Inc. The system 106 can include two operator work stations, one for each of the interceptor UAVs 110 that can be deployed against a single target UAV 199. The foregoing elements can be transported in first containers 107a (e.g., six such containers) and second containers 107b can be used to carry miscellaneous components and other components not specifically shown in Figure 7, including the vehicle itself, launch systems, recovery systems, and storage and health systems. These containers are specifically designed to be readily transported and handled manually or with automated equipment.

One feature of several of the embodiments described above is that the system 100 can include the capability for the interceptor UAV 110 to be recovered and reused, for example, if it has not successfully engaged with an incoming target. This feature can be advantageous because it reduces the cost of operating the system 100 in the event that a particular interceptor UAV 110 is unable to successfully engage with the target. This feature can also reduce or eliminate the likelihood for collateral damage.

Another feature of at least some of the foregoing embodiments is that the overall system 100 can deploy multiple interceptor UAVs 110 against a single incoming target UAV 199. This ability to provide redundant and/or multiple countermeasures against the target UAV 199, thus improving the likelihood for disabling the target UAV 199. For example, this arrangement can provide a "second chance" in the event that an initial interceptor UAV is unsuccessful in its attempt to disable the incoming target UAV 199. The overall result of the foregoing features is that the system 100 can be robust and low cost, compared with other conventional systems.

Still another feature of at least some of the embodiments described above is that the interceptor UAV 110 can include counter-rotating propellers located along the length of the UAV and/or integrated with the fin structure of the UAV. An advantage of this configuration is that it can provide a compact, efficient, propeller-based interceptor function, suitable for intercepting vehicles having relatively low airspeeds, without the complexity, expense, and/or handling complications presented by more complex rocket-based or gas turbine-based systems. In addition, this configuration is expected to be highly maneuverable, which can in turn increase the likelihood of a successful engagement. For example, the highly maneuverable configuration can allow the interceptor UAV 110 to account for evasive maneuvers performed by the target UAV 199, and/or can allow the interceptor UAV 110 to re-engage with the target UAV 199 if its initial engagement is unsuccessful.

From the foregoing, it will be appreciated that specific embodiments of the disclosed technology have been described herein for purposes of illustration, but that various modifications may be made without deviating from the technology. For example, while certain embodiments of the system were described above in the context of an interceptor UAV that deploys a net to engage and disable a target UAV, in other embodiments, the interceptor UAV can include other disabling systems. Such disabling systems can include the nose or other portion of the interceptor UAV 110 in an embodiment for which the interceptor UAV strikes the target UAV 199 in order to disable it. The first and second detectors described above in the context of radars 104a, 104b can have other configurations (e.g., IR or optical detectors) in other embodiments. Representative embodiments of the interceptor UAV 110 are shown as having a missile-type silhouette, with a generally round, cylindrical shape. In other embodiments, the interceptor UAV fuselage can have other shapes, and/or the flight vehicle 111 can have other suitable overall configurations. The flight vehicle 111 can have four fins arranged in a cruciform shape in some embodiments, and can have other arrangements and/or numbers of fins (e.g., three) in other embodiments. The flight vehicle 111 can launch vertically and land horizontally onto an airbag in some embodiments, and can launch and/or land in other manners in other embodiments. "Disabling" the target UAV can include causing the target UAV to deviate from its flight path sufficiently to reduce or eliminate the threat provided by the target UAV. This can include causing the target UAV to crash, arresting the target UAV, disrupting the target UAV and/or diverting the target UAV from its intended target or other target of value. The engagement system and/or the disabling system can be designed into the flight vehicle prior to manufacture, and/or can be configured to retrofit an existing flight vehicle.

Certain aspects of the technology described in the context of particular embodiments may be combined or eliminated in other embodiments. For example, while certain embodiments were described above in the context of a system that deploys multiple interceptor UAVs toward a single target UAV, other systems may be configured to deploy only a single interceptor UAV against any single incoming target UAV. Certain aspects of the overall system may be combined and/or segregated, depending upon the particular embodiment. For example, the launch control system can be integrated with one or more portions of the target acquisition system. The multiple radars (or other detectors) can be combined into a single detector. Furthermore, while advantages associated with certain embodiments of the disclosed technology have been described in the context of those embodiments, other embodiments may also exhibit such advantages, and not all embodiments need necessarily exhibit such advantages to fall within the scope of the present technology. Accordingly, the present disclosure and associated technology can encompass other embodiments not expressly shown or described herein.

## Claims

1. An interceptor UAV (110) for disabling a target UAV (199), the interceptor UAV comprising:
a flight vehicle having:
a generally cylindrical fuselage (112) elongated along a fuselage axis (113);
a propulsion system (120) that includes:
a first propeller (121a) positioned along the fuselage axis (113);
a second propeller (121b) positioned along the fuselage axis (113); and
a power source (123) coupled to the first and second propellers to rotate the first propeller in a first direction and rotate the second propeller in a second direction opposite the first direction;
a fin (114) carried by the fuselage and being one of three fins, wherein each fin includes a slot that receives the first and second propellers as the propellers rotate;
at least one control surface (131);
a guidance system (130) carried by the flight vehicle and coupled to the at least one control surface; and
a disabling system (150) carried by the flight vehicle and having a first, inactive mode and a second, active mode, wherein in the second mode, the disabling system is positioned to disable the target UAV.

2. The interceptor UAV of claim 1 wherein the guidance system is configured to direct the flight vehicle along a controlled flight path to ground.

3. The interceptor UAV of claim 1 wherein the guidance system is configured to direct the flight vehicle along a controlled flight path to ground upon receiving at least one of the following indications:
(a) an indication to not engage with the target UAV; or
(b) an indication that the interceptor UAV did not sufficiently disable the target UAV.

4. The interceptor UAV of claim 1 wherein the fin is one of four fins arranged in a cruciform shape.

5. The interceptor UAV of claim 4, wherein:
each fin has a fin slot (115) extending from the fuselage in an outboard direction transverse to the fuselage axis;
the first propeller is carried by the fuselage and rotatable about the fuselage axis in the first direction to sequentially pass in and out of successive fin slots;
the second propeller is carried by the fuselage and rotatable about the fuselage axis in the second direction opposite the first direction to sequentially pass in and out of the successive fin slots;
the at least one control surface is carried by at least one of the fins;
wherein the power source (123) is carried by the fuselage, the power source including a first electric motor (122a) coupled to the first propeller to rotate the first propeller in the first direction, and a second electric motor (122b) coupled to the second propeller to rotate the second propeller in the second direction; and
wherein the propulsion system further comprises a stored electrical energy source (124) coupled to the first and second electric motors;
the disabling system comprises a deployable net (151) carried by the flight vehicle and having a first, inactive mode and a second, active mode, wherein in the second mode, the deployable net is deployed from the flight vehicle to disable the target UAV.

6. The interceptor UAV of claim 5 wherein the net is configured to detach from the interceptor UAV after deploying.

7. The interceptor UAV of claim 5 wherein the net is configured to remain attached to the interceptor UAV after deploying.

8. The interceptor UAV of claim 5 wherein the stored energy source includes a single source for both the first and second motors.

9. The interceptor UAV of claim 5 wherein the stored energy source includes a first source (124a) for the first motor and a second source (124b) for the second motor.

10. A method for disabling a target UAV, comprising:
directing an interceptor UAV according to claim 1 toward the target UAV; and
directing the interceptor UAV back to ground along a controlled flight path.

11. The method of claim 10 wherein directing the interceptor UAV back to ground is performed in response to an instruction not to engage with the target UAV.

12. The method of claim 10 wherein directing the interceptor UAV back to ground is performed in response to an unsuccessful attempt by the interceptor UAV to engage with the target UAV.

13. The method of claim 10 wherein directing the interceptor UAV back to ground is performed in response to successfully deploying a disabling element to disable the target UAV.

## Patentansprüche

1. Abfangdrohne (110) zum Deaktivieren einer Zieldrohne (199), wobei die Abfangdrohne umfasst:
ein Fluggerät mit:
einem im allgemeinen zylindrischen Rumpf (112), der entlang einer Rumpfachse (113) langgestreckt ist;
einem Antriebssystem (120), das umfasst:
einen ersten Propeller (121a), der entlang der Rumpfachse (113) angeordnet ist;
einen zweiten Propeller (121b), der entlang der Rumpfachse (113) angeordnet ist; und
eine Energiequelle (123), die mit dem ersten und dem zweiten Propeller gekoppelt ist, um den ersten Propeller in einer ersten Richtung zu drehen und den zweiten Propeller in einer zweiten Richtung entgegengesetzt zur ersten Richtung zu drehen;
einer Flosse (114), die von dem Rumpf getragen ist und eine von drei Flossen ist, wobei jede Flosse einen Schlitz aufweist, der den ersten und zweiten Propeller aufnimmt, wenn sich die Propeller drehen;
mindestens einer Steuerfläche (131);
einem Lenksystem (130), das von dem Fluggerät getragen ist und mit der mindestens einen Steuerfläche gekoppelt ist; und
einem Deaktivierungssystem (150), das von dem Fluggerät getragen ist und einen ersten, inaktiven Modus und einen zweiten, aktiven Modus aufweist, wobei in dem zweiten Modus das Deaktivierungssystem positioniert ist, um die Zieldrohne zu deaktivieren.

2. Abfangdrohne nach Anspruch 1, bei der das Lenksystem konfiguriert ist, um das Fluggerät entlang einer kontrollierten Flugbahn zum Boden zu leiten.

3. Abfangdrohne nach Anspruch 1, bei der das Lenksystem konfiguriert ist, um das Fluggerät entlang eines gesteuerten Flugweges zum Boden zu leiten, nachdem es mindestens einen der folgenden Hinweise erhalten hat:
(a) einen Hinweis, die Zieldrohne nicht anzugreifen; oder
(b) einen Hinweis darauf, dass die Abfangdrohne die Zieldrohne nicht ausreichend deaktiviert hat.

4. Abfangdrohne nach Anspruch 1, bei der die Flosse eine von vier kreuzförmig angeordneten Flossen ist.

5. Abfangdrohne nach Anspruch 4, bei der:
jede Flosse einen Flossenschlitz (115) aufweist, der sich vom Rumpf quer zur Rumpfachse in einer Richtung nach außen erstreckt;
der erste Propeller vom Rumpf getragen ist und um die Rumpfachse in der ersten Richtung drehbar ist, um sequentiell in aufeinanderfolgende Flossenschlitze ein- und aus diesen auszutreten;
der zweite Propeller vom Rumpf getragen ist und um die Rumpfachse in der zweiten Richtung entgegengesetzt zur ersten Richtung drehbar ist, um sequentiell in die aufeinanderfolgenden Flossenschlitze ein- und aus diesen auszutreten;
die mindestens eine Steuerfläche von mindestens einer der Flossen getragen ist;
wobei die Energiequelle (123) von dem Rumpf getragen ist, wobei die Energiequelle einen ersten Elektromotor (122a), der mit dem ersten Propeller gekoppelt ist, um den ersten Propeller in der ersten Richtung zu drehen, und einen zweiten Elektromotor (122b) umfasst, der mit dem zweiten Propeller gekoppelt ist, um den zweiten Propeller in der zweiten Richtung zu drehen; und
wobei das Antriebssystem ferner eine Quelle von gespeicherter elektrischer Energie (124) umfasst, die mit dem ersten und zweiten Elektromotor gekoppelt ist;
das Deaktivierungssystem ein ausbringbares Netz (151) umfasst, das von dem Fluggerät getragen ist und einen ersten, inaktiven Modus und einen zweiten, aktiven Modus aufweist, wobei in dem zweiten Modus das ausbringbare Netz von dem Fluggerät aus ausgebracht wird, um die Zieldrohne zu deaktivieren.

6. Abfangdrohne nach Anspruch 5, wobei das Netz konfiguriert ist, um sich nach dem Ausbringen von der Abfangdrohne zu lösen.

7. Abfangdrohne nach Anspruch 5, bei der das Netz konfiguriert ist, um nach dem Ausbringen an der Abfangdrohne befestigt zu bleiben.

8. Abfangdrohne nach Anspruch 5, bei der die Quelle gespeicherter Energie eine einzige Quelle sowohl für den ersten als auch für den zweiten Motor umfasst.

9. Abfangdrohne nach Anspruch 5, bei der die Quelle gespeicherter Energie eine erste Quelle (124a) für den ersten Motor und eine zweite Quelle (124b) für den zweiten Motor umfasst.

10. Verfahren zum Deaktivieren einer Zieldrohne, umfassend:
Lenken einer Abfangdrohne nach Anspruch 1 auf die Zieldrohne; und
Zurücklenken der Abfangdrohne zum Boden entlang einer kontrollierten Flugbahn.

11. Verfahren nach Anspruch 10, bei dem das Zurücklenken der Abfangdrohne zum Boden als Reaktion auf eine Anweisung, die Zieldrohne nicht anzugreifen, durchgeführt wird.

12. Verfahren nach Anspruch 10, bei dem das Zurücklenken der Abfangdrohne zum Boden als Reaktion auf einen erfolglosen Versuch der Abfangdrohne, die Zieldrohne anzugreifen, durchgeführt wird.

13. Verfahren nach Anspruch 10, bei dem das Zurücklenken der Abfangdrohne zum Boden als Reaktion auf die erfolgreiche Ausbringung eines Deaktivierungselements zum Deaktivieren der Zieldrohne durchgeführt wird.

## Revendications

1. Intercepteur de véhicule aérien sans pilote, UAV, (110) pour désactiver un UAV cible (199), l'intercepteur d'UAV comprenant :
un véhicule de vol ayant :
un fuselage généralement cylindrique (112) allongé le long d'un axe de fuselage (113) ;
un système de propulsion (120) qui comprend :
une première hélice (121a) positionnée le long de l'axe de fuselage (113) ;
une seconde hélice (121b) positionnée le long de l'axe de fuselage (113) ; et
une source d'alimentation (123) couplée aux première et seconde hélices pour faire tourner la première hélice dans une première direction et faire tourner la seconde hélice dans une seconde direction opposée à la première direction ;
une aile (114) portée par le fuselage et étant l'une des trois ailes, dans lequel chaque aile comprend une fente qui reçoit les première et seconde hélices lorsque les hélices tournent ;
au moins une surface de commande (131) ;
un système de guidage (130) porté par le véhicule de vol et couplé à la au moins une surface de commande ; et
un système de désactivation (150) porté par le véhicule de vol et ayant un premier mode inactif et un second mode actif, dans lequel, dans le second mode, le système de désactivation est positionné pour désactiver l'UAV cible.

2. Intercepteur d'UAV selon la revendication 1, dans lequel le système de guidage est configuré pour diriger le véhicule de vol le long d'une trajectoire de vol commandée vers le sol.

3. Intercepteur d'UAV selon la revendication 1, dans lequel le système de guidage est configuré pour diriger le véhicule de vol le long d'une trajectoire de vol commandée vers le sol lors de la réception d'au moins l'une des indications suivantes :
(a) une indication de ne pas s'engager avec l'UAV cible ; ou
(b) une indication que l'intercepteur d'UAV n'a pas suffisamment désactivé l'UAV cible.

4. Intercepteur d'UAV selon la revendication 1, dans lequel l'aile est l'une des quatre ailes agencées en forme de croix.

5. Intercepteur d'UAV selon la revendication 4, dans lequel :
chaque aile a une fente d'aile (115) s'étendant depuis le fuselage dans une direction vers l'extérieur transversale à l'axe du fuselage ;
la première hélice est portée par le fuselage et peut tourner autour de l'axe du fuselage dans la première direction pour passer séquentiellement dans et hors de fentes d'aile successives ;
la seconde hélice est portée par le fuselage et peut tourner autour de l'axe de fuselage dans la seconde direction opposée à la première direction pour passer séquentiellement dans et hors des fentes d'ailes successives ;
la au moins une surface de commande est portée par au moins une des ailes ;
dans lequel la source d'alimentation (123) est portée par le fuselage, la source d'alimentation comprenant un premier moteur électrique (122a) couplé à la première hélice pour faire tourner la première hélice dans la première direction, et un second moteur électrique (122b) couplé à la seconde hélice pour faire tourner la seconde hélice dans la seconde direction ; et
dans lequel le système de propulsion comprend en outre une source d'énergie électrique stockée (124) couplée aux premier et second moteurs électriques ;
le système de désactivation comprend un filet déployable (151) porté par le véhicule de vol et ayant un premier mode inactif et un second mode actif, dans lequel dans le second mode, le filet déployable est déployé à partir du véhicule de vol pour désactiver l'UAV cible.

6. Intercepteur d'UAV selon la revendication 5, dans lequel le filet est configuré pour se détacher de l'intercepteur d'UAV après déploiement.

7. Intercepteur d'UAV selon la revendication 5, dans lequel le filet est configuré pour rester attaché à l'intercepteur d'UAV après son déploiement.

8. Intercepteur d'UAV selon la revendication 5, dans lequel la source d'énergie stockée comprend une source unique pour les premier et second moteurs.

9. Intercepteur d'UAV selon la revendication 5, dans lequel la source d'énergie stockée comprend une première source (124a) pour le premier moteur et une seconde source (124b) pour le second moteur.

10. Procédé pour désactiver un UAV cible, comprenant les étapes consistant à :
diriger un intercepteur d'UAV selon la revendication 1 vers l'UAV cible ; et
diriger l'intercepteur d'UAV en retour vers le sol le long d'une trajectoire de vol commandée.

11. Procédé selon la revendication 10, dans lequel la redirection de l'intercepteur d'UAV vers le sol est effectuée en réponse à une instruction de ne pas s'engager avec l'UAV cible.

12. Procédé selon la revendication 10, dans lequel la redirection de l'intercepteur d'UAV vers le sol est effectué en réponse à une tentative infructueuse de l'intercepteur d'UAV de s'engager avec l'UAV cible.

13. Procédé selon la revendication 10, dans lequel la redirection de l'intercepteur d'UAV vers le sol est effectuée en réponse au déploiement réussi d'un élément de désactivation pour désactiver l'UAV cible.
